# EUROPÄISCHE PATENTSCHRIFT

(11) **EP 0 816 125 B1**
(45) Veröffentlichungstag und Bekanntmachung des Hinweises auf die Patenterteilung: **13.03.2002**
(21) Anmeldenummer: 97107759.9
(22) Anmeldetag: 13.05.1997
(51) Int. Cl.: B60B 1/12, B60B 3/10, B60B 3/04, B23K 15/00

(54) **Verfahren zum Verbinden von zwei Radteilen**
Method for joining two wheel parts
Procédé pour lier deux éléments de roue

(30) Priorität: 27.06.1996 DE 19625725
(43) Veröffentlichungstag der Anmeldung: 07.01.1998
(73) Patentinhaber: Dr.Ing.h.c. F. Porsche Aktiengesellschaft, 70435 Stuttgart (DE)
(72) Erfinder: Stach, Jens, 71735 Eberdingen (DE)

(56) Entgegenhaltungen:
- EP-A- 0 768 191
- EP-A- 0 826 442
- DE-A- 4 138 558

## Beschreibung

Die Erfindung bezieht sich auf ein Verfahren zum Verbinden eines Felgensterns, insbesondere mit Hohlspeichen, mit einem Felgenbett eines Rades mittels einer Schweißung, wobei die beiden Felgenteile mindestens zwei gegenüberstehende Verbindungsflächen am Radaußenrand aufweisen, die als gegenüberstehende Kreisringflächen ausgeführt sind.

Es ist aus der gattungsgemäßen DE 41 38 558 C2 ein Rad, bestehend aus einem Felgenstern und einem Felgenbett bekannt, die über eine Reibschweißung am Radaußenrand miteinander verbunden werden. Die Felgenteile weisen hierzu an dem Radaußenrand jeweils gegenüberstehende Kreisringflächen als Verbindungsflächen für die Reibschweißung auf.

Die Erfindung liegt die Aufgabe zugrunde, ein Schweißverfahren zur Verbindung von separat hergestellten Felgenteilen anzuwenden, das einfach durchführbar ist und bei einem Rad eine festigkeitsgerechte und dauerhafte Verbindung gewährleistet.

Die mit der Erfindung hauptsächlich erzielten Vorteile bestehen darin, daß durch die Verbindung der beiden Felgenteile mittels eines Elektronenstrahlschweißens, aufwendige Vorrichtungen, wie sie beim Reibschweißen Verwendung finden, vermieden werden.

Das Elektronenschweißverfahren kann in vorteilhafter Weise von außen oder innen angewendet werden, so daß die übereinanderliegenden Schweißflächen in einem Vorgang geschweißt werden können.

Möglich ist auch eine Schweißung der beiden übereinanderliegenden Schweißflächen einzeln von innen oder von außen, was von den Gegebenheiten bzw. vom Abstand der Schweißflächen abhängig ist.

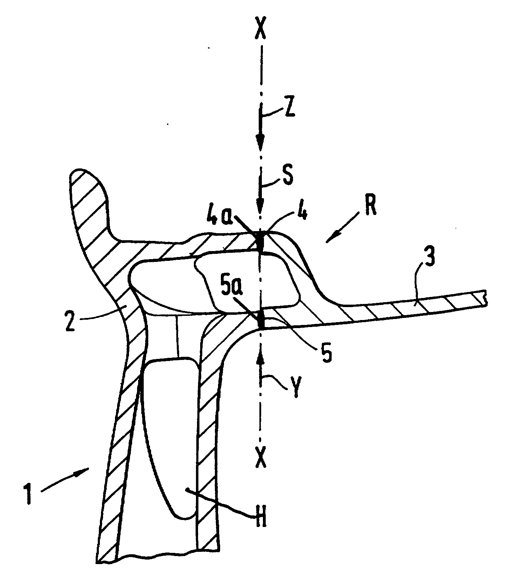

Ein Ausführungsbeispiel der Erfindung ist in der Zeichnung dargestellt, die ein Teilbereich eines Rades, bestehend aus zwei Teilen, einem Felgenstem und einem Felgenbett, im Schnitt zeigt.

Ein Rad 1 für ein Kraftfahrzeug, besteht aus einem Felgenstern 2 sowie einem Felgenbett 3, die über mindestens eine Schweißung nach dem Prinzip des Elektronenstrahlschweißens miteinander verbunden werden.

Hierzu weisen die beiden Felgenteile 2 und 3 am Radaußenrand R gegenüberstehende Kreisringflächen auf, die etwa in einer Ebene X-X angeordnet sind. Der Schweißvorgang erfolgt vorzugsweise von außen in Pfeilrichtung Z, wozu die beiden Felgenteile 2 und 3 in einer Vorrichtung eingespannt und maßgenau gehalten sind. Mittels des Elektronenstrahlschweißens werden die beiden Kreisringflächen 4, 5 und 4a, 5a der Felgenteile 2 und 3 miteinander durch einen einzigen Schweißvorgang verbunden.

Bei Bedingungen, die eine einzige Schweißung nicht zulassen, sind auch zwei Schweißvorgänge sowohl von innen als auch von außen möglich, wobei dann beispielsweise die Fläche 4, 4a und anschließend die fläche 5, 5a miteinander verschweißt werden.

Die Materialien der beiden Felgenteile 2 und 3 bestehen aus Leichtmetallegierungen, wobei dies Magnesiumlegierungen oder Aluminiumlegierungen sein können. Eine Verbindung des Felgensternes 2 mit dem Felgenbett 3 über die Elektronenstrahlschweißung kann bei Verwendung von gleichen Werkstoffen oder auch unterschiedlichen Werkstoffen erfolgen.

Der Schweißvorgang ist an einem Rad mit Hohlspeichen H dargestellt. Möglich ist es auch bei einer Ausführung des Rades ohne Hohlspeichen, das Schweißverfahren anzuwenden, wobei aber in jedem Fall die beiden Schweißringflächen vorgesehen sind.

## Patentansprüche

1. Verfahren zum Verbinden eines Felgensterns (2), insbesondere mit Hohlspeichen, mit einem Felgenbett (3) eines Rades (1), mittels einer Schweißung, wobei die beiden Felgenteile (2,3) mindestens zwei gegenüberstehende Verbindungsflächen (4, 5 und 4a, 5a) am Radaußenrand aufweisen, die als gegenüberstehende Kreisringflächen ausgeführt sind, **dadurch gekennzeichnet, daß** die gegenüberstehenden Verbindungsflächen (4, 5 und 4a, 5a) des Felgensterns (2) und des Felgenbettes (3) in einer annähernd vertikalen Ebene (X-X) ausgerichtet und mittels mindestens einer Elektronenstrahlschweißung miteinander verbunden werden.

2. Verfahren nach Anspruch 1, **dadurch gekennzeichnet, daß** die beiden Verbindungsflächen (4, 5 und 4a, 5a) von außen in Pfeilrichtung (Z) mittels eines Schweißvorgangs durchgeschweißt werden.

3. Verfahren nach Anspruch 1, **dadurch gekennzeichnet, daß** die beiden Verbindungsflächen (4a, 5a) von innen in Pfeilrichtung (Y) in einem Schweißvorgang durchgeschweißt werden.

4. Verfahren nach Anspruch 1, **dadurch gekennzeichnet, daß** die beiden Verbindungsflächen (4, 5 und 4a, 5a) jeweils einmal von innen und einmal von außen verschweißt werden.

5. Verfahren nach einem oder mehreren der vorhergehenden Ansprüche, **dadurch gekennzeichnet, daß** die beiden Felgenteile aus gleichen und/oder unterschiedlichen Leichtmetallegierungen bestehen, die über ein Elektronenschweißverfahren miteinander verbunden werden.

## Claims

1. A method of joining a rim star member (2), in particular having hollow spokes, to a rim base (3) of a wheel (1), by means of a weld, wherein the two rim parts (2, 3) have at least two opposed connexion faces (4, 5 and 4a, 5a) on the outer edge of the wheel, the connexion faces (4, 5 and 4a, 5a) being designed in the form of opposed annular faces, **characterized in that** the opposed connexion faces (4, 5 and 4a, 5a) of the rim star member (2) and the rim base (3) are orientated in a substantially vertical plane (X-X) and are joined together by means of at least one electron-beam weld.

2. A method according to Claim 1, **characterized in that** the two connexion faces (4, 5 and 4a, 5a) are welded from the outside in the direction of the arrow (Z) by means of one welding process.

3. A method according to Claim 1, **characterized in that** the two connexion faces (4, 5 and 4a, 5a) are welded from the inside in the direction of the arrow (Y) in one welding process.

4. A method according to Claim 1, **characterized in that** the two connexion faces (4, 5 and 4a, 5a), respectively, are welded once from the inside and once from the outside.

5. A method according to one or more of the preceding Claims, **characterized in that** the two rim parts consist of the same and/or different light-metal alloys joined to each other by way of an electron-beam welding process.

## Revendications

1. Procédé pour relier une étoile de jante (2), comportant en particulier des rayons creux, à une base de jante (3) d'une roue (1), au moyen d'une soudure, les deux parties de jante (2, 3) présentant au moins deux surfaces de liaison (4, 5 et 4a, 5a) qui se font face sur le bord extérieur de la roue et qui sont réalisées en tant que surfaces d'anneau de cercle se faisant face, **caractérisé en ce que** les surfaces de liaison (4, 5 et 4a, 5a) qui se font face de l'étoile de jante (2) et de la base de jante (3) sont orientées dans un plan (X-X) approximativement vertical et sont reliées entre elles par au moins une soudure par bombardement électronique.

2. Procédé selon la revendication 1, **caractérisé en ce que** les deux surfaces de liaison (4, 5 et 4a, 5a) sont soudées de part en part et de l'extérieur dans le sens de la flèche (Z), par une opération de soudage.

3. Procédé selon la revendication 1, **caractérisé en ce que** les deux surfaces de liaison (4a, 5a) sont soudées de part en part et de l'intérieur dans le sens de la flèche (Y) au cours d'une opération de soudage.

4. Procédé selon la revendication 1, **caractérisé en ce que** les deux surfaces de liaison (4, 5 et 4a, 5a) sont soudées une fois de l'intérieur et une fois de l'extérieur.

5. Procédé selon une ou plusieurs des revendications précédentes, **caractérisé en ce que** les deux parties de jante sont constituées d'alliages légers identiques et/ou différents qui sont assemblés entre eux par un procédé de soudage par bombardement électronique.
